Europäisches Patentamt

European Patent Office

Office européen des brevets

(11) Publication number: **0 475 308 A1**

# EUROPEAN PATENT APPLICATION

(21) Application number: **91115128.0**

(22) Date of filing: **06.09.91**

(51) Int. Cl.5: **C22B 3/10**, C22B 23/00

(30) Priority: **12.09.90 JP 241693/90**

(43) Date of publication of application:
**18.03.92 Bulletin 92/12**

(84) Designated Contracting States:
**DE FR GB SE**

(71) Applicant: **NISSHIN STEEL CO., LTD.**
**4-1 Marunouchi 3-chome**
**Chiyoda-ku Tokyo 100(JP)**

(72) Inventor: **Nagabayashi, Retsu**
**Nisshin-Seiko-Kabushikikaisha**
**Tekko-Kenkyusho-nai, 4976**
**Nomura-Minamimachi**
**Shinnanyo-shi Yamaguchi-ken(JP)**
Inventor: **Hasegawa, Kazuo**
**Nisshin-Seiko-Kabushikikaisha**
**Sinzairyo-Kenkyusho-nai, 7-1**
**Kouya-Shinmachi**
**Ichikawa-shi Chiba-ken(JP)**
Inventor: **Hasegawa, Morihiro**
**Nisshin-Seiko-Kabushikikaisha**
**Tekko-Kenkyusho-nai, 11-1, Showa-cho**
**Kure-shi Yamaguchi-ken(JP)**
Inventor: **Kinugasa, Masayuki**
**Nisshin-Seiko-Kabushikikaisha**
**3-9 Takasu 1-chome, Nishi-ku, Hiroshima-shi**
**Hiroshima-ken(JP)**

(74) Representative: **von Füner, Alexander, Dr. et al**
**Patentanwälte v. Füner, Ebbinghaus, Finck**
**Mariahilfplatz 2 & 3**
**W-8000 München 90(DE)**

(54) **Method for treating nickel magnesium silicate ores.**

(57) Disclosed herein is a method for treating nickel magnesium silicate ores which includes a leaching step consisting of leaching a magnesium nickel silicate ore with hydrochloric acid, thereby separating the ore into a leach containing nickel, iron, and magnesium, and residues composed mainly of silica; a drying-calcining step consisting of drying up the leach and roasting the residues, thereby making all of nickel and iron and part of magnesium water-insoluble and also recovering hydrochloric acid, and a washing step consisting of washing the roasted product with water, thereby separating it into a water-insoluble mass composed of all of nickel and iron and a portion of magnesium and an aqueous solution of magnesium chloride, wherein said method being characterized in that the roasting is carried out at a temperature from 150 °C to 250 °C.

The present invention relates to a method for treating nickel silicate magnesium ores.

A widespread industrial method for producing ferronickel from a nickel magnesium silicate ore consists of drying and roasting the ore in a kiln and melting the ore together with gangue in an electric furnace, without carrying out separation and concentration of nickel. Nickel magnesium silicate ores contain a large amount of gangue and only a small amount of nickel (about 2 %). The conventional method is disadvantageous in that expensive electric energy is wasted to melt the whole ore including the large amount of gangue at a high temperature (about 1600 °C) to produce a large amount of slag, which must be disposed. For this reason, there has been a strong demand for a technology for effectively removing gangue from nickel magnesium silicate ores, that is, a technology for effectively concentrating nickel.

There are several reports on separation and concentration of nickel from nickel oxide ores; however, any of them is not yet commercially employed.

Some of us invented a method for treating nickel magnesium silicate ores. (Japanese Patent application No. 1-100228) This method includes a leaching step, a drying-roasting step, and a washing step. The leaching step consists of leaching nickel magnesium ore with hydrochloric acid, thereby separating the ore into a leach containing nickel, iron, and magnesium, and a residue composed mainly of silica. The drying-roasting step consists of drying and roasting the leach at a temperature of from 250 °C to 500 °C, thereby converting all of the nickel and iron and a portion of the magnesium to water-insoluble substances and also recovering hydrochloric acid. The washing step consists of washing the roasted product with water, thereby separating it into a water-insoluble residue (a nickel concentrate) which contains all of the nickel and iron and a portion of the magnesium and an aqueous solution of magnesium chloride.

This method is disadvantageous in that a long residence time is required in the reactor and conversion of magnesium into water-insoluble compounds is excessively promoted when the gas flow rate is high and sometimes nickel content of the nickel concentrate is low relative to the amount of magnesium when the roasting temperature is high and the residence time is long.

Concerning elimination of the above-mentioned disadvantages, we have found that high grade nickel can be recovered in a high yield with a low content ratio of water-insoluble magnesium compounds by dropping or spraying the hydrochloric acid leach into a fluidized bed roaster which is kept at a low temperature of from 150 °C to 250 °C unlike the conventional method, thereby carrying out drying and roasting simultaneously, extracting the roasted product with water, thereby separating it into a water-soluble mass containing all of the nickel and iron and a portion of the magnesium and a solution containing magnesium chloride.

The present invention provides, in the method for treating nickel magnesium silicate ores which comprises a leaching step consisting a leaching magnesium nickel silicate ore with hydrochloric acid, thereby separating the ore into a leach containing nickel, iron, and magnesium, and a residue composed mainly of silica; a drying-roasting step consisting of drying the leach and roasting the residue, thereby converting all of the nickel and iron and the a portion of the magnesium into, water-insoluble substances and also recovering hydrochloric acid, and a washing step consisting of washing the roasted product with water, thereby separating it into a water-insoluble portion containing of the nickel and iron and a portion of the magnesium and an aqueous solution of magnesium chloride; a method characterized in that the drying-roasting is carried out at a temperature of from 150 °C to 250 °C.

The product of the washing step in this invention can be used as is as a feed stock for steelmaking. The product may be further roasted to remove chlorine obtaining oxides of nickel, iron, and magnesium.

The residue of the leaching step, which is mainly composed of $SiO_2$ is washed with an acid or water and dried so as to obtain $SiO_2$ powder.

The $MgCl_2$ solution from the washing step is dried so as to obtain $MgCl_2$ hydrate.

The $MgCl_2$ can be roasted to produce MgO and recover HCl.

In the present invention, the steps other than the drying-roasting step are not different from those in the conventional method.

In the drying-roasting step, drying and roasting are carried out at a temperature of not lower than 150 °C and lower than 250 °C. The method of drying-roasting is not specifically limited, although it is preferred to drop or spray the leach into a fluidized bed comprising the product of roasting so as to accomplish drying and roasting simultaneously. This method eliminates the necessity of charging and discharging the dried product, thereby reducing the loss of dried product, simplifying the apparatus, and decreasing the heat loss.

In the drying-roasting step, when the residence time exceeds 5 hours and the Reynolds number is 1 or larger, conversion of magnesium into water-insoluble substances is liable to be promoted if the roasting temperature is 250 °C or higher. If the roasting temperature lower than 150 °C is employed, the nickel is not completely converted to water-insoluble substances and thus the recovery of nickel is reduced.

As described above, the present invention offers an advantage that all of nickel and iron can be converted to water-insoluble substances with less conversion of magnesium to water-insoluble substances than the conventional method. This leads to the reduction of the slag formation when the nickel concentrate is melted as a nickel feed stock.

The invention will be described in detail by way of working examples, which are not intended to restrict the scope of the invention.

Example 1

Table 1                    (%)

| Composition | Ni | Fe | MgO | SiO$_2$ |
|---|---|---|---|---|
| Ni-Mg Silicate ores in General | 1.0-2.5 | 9.0-15 | 20-30 | 35-50 |
| Ore Used | 2.4 | 10.6 | 28.17 | 40.45 |

A magnesium nickel silicate ore, the chemical composition of which is indicated in Table 1, was crushed (finer than 80 mesh), and the crushed ore (70 kg) was stirred in 230 liters of 6N hydrochloric acid at 60-90 °C for 2 hours to leach out nickel, iron, and magnesium. The leach was filtered to remove silica. The filtrate was found to contain 6.29 mg/ml, 26.28 mg/ml, and 35.70 mg/ml of nickel, iron, and magnesium, respectively. In other words, nickel and iron were leached out almost completely, and about 80 % of magnesium was leached out. The leach was dropped or sprayed at a flow rate of 20-30 liters/h into a fluidized bed roaster (450 mm in diameter) at 210 °C to carry out drying and roasting simultaneously. (The fluidized bed roaster contained 250 kg of particles (having an average particle diameter of 1.2 mm) which were fluidized by air fed at a flow rate of 680 Nm$^3$/h.) The roasted product was extracted with water to obtain a water-insoluble containing all of the nickel and iron and a portion of the magnesium and an aqueous solution containing magnesium chloride. The water-insoluble mass was found to contain 7.50 % nickel, 31.48 % iron, and 15.04 % magnesium. The recovery of nickel was 99.6 %.

Example 2

The same nickel magnesium silicate ore as used in Example 1 was leached with hydrochloric acid in the same manner as in Example 1. By filtration, there was obtained a leach containing nickel, iron, and magnesium. This leach was fed at a flow rate of 10-20 liters/h into the same fluidized bed roaster (at 170 °C) as used in Example 1 to conduct drying and roasting under the same conditions as in Example 1. The roasted product was extracted with water to separate it into an aqueous solution and a water-insoluble mass in the same manner as in example 1. It was found that the water-insoluble mass contained 8.63 % nickel, 36.66 % iron, and 12.34 % magnesium. The recovery of nickel was 95.1 %.

Comparative Example 1

The same magnesium nickel silicate ore as used in Example 1 was leached with hydrochloric acid in the same manner as in Example 1. By filtration, there was obtained a leach containing nickel, iron, and magnesium. This leach was roasted in the same fluidized bed roaster as used in Example 1 to conduct drying and roasting under the same conditions as in Example 1, except that the temperature was changed to 140 °C. The roasted product was extracted with water to separate it into an aqueous solution and a water-insoluble mass in the same manner as in Example 1. It was found that the water-insoluble mass contained 7.77 % nickel, 42.59 % iron, and 9.93 % magnesium. Only 73.8 % of the nickel was converted into water-insoluble substances. Thus the recovery of nickel was much lower than that in Example 1 and 2.

Comparative Example 2

The same nickel magnesium silicate ore as used in Example 1 was leached with hydrochloric acid in the same manner as in Example 1. By filtration, there was obtained a leach containing nickel, iron, and magnesium. This leach was fed to the same fluidized bed roaster as used in Example 1 to conduct drying and roasting under the same conditions as in Example 1, except that the temperature was changed to 300 °C. The roasted product was extracted with water to separate it into a solution and a water-insoluble mass in the same manner as in Example 1. It was found that the water-insoluble mass contained 6.46 % nickel, 26.17 % iron, and 17.77 % magnesium. Although 100 % of the nickel was converted into water-insoluble substances and 100 % of the nickel was recovered, the grade of the nickel was lower by 1.04 % than that in Example 1, because 45.9 % of magnesium remained in the water-insoluble substances.

The results of Examples 1 and 2 and Comparative Examples 1 and 2 are shown in Table 2.

Table 2 (%)

| Composition | Ni | Fe | Mg | $SiO_2$ | Ni recovery |
|---|---|---|---|---|---|
| Example 1 | 7.50 | 31.48 | 15.04 | 0.0 | 99.6 |
| Example 2 | 8.63 | 36.66 | 12.34 | 0.0 | 95.1 |
| Comparative Example 1 | 7.77 | 42.59 | 9.93 | 0.0 | 73.8 |
| Comparative Example 2 | 6.46 | 26.17 | 17.77 | 0.0 | 100 |

The method of the present invention permits the production of nickel concentrates at a higher recovery more efficiently under stabler conditions than the conventional method. In addition, it permits the roasting at a lower temperature than the conventional method. This makes it possible to use a waste gas from other equipment. Therefore, the method of the present invention is advantageous from the standpoint of equipment and energy cost.

**Claims**

1. In the method for treating nickel magnesium silicate ores which comprises a leaching step consisting of leaching a magnesium nickel silicate ore with hydrochloric acid, thereby separating the ore into a leach containing nickel, iron, and magnesium, and a residue composed mainly of silica; a drying-roasting step consisting of drying the leach and roasting the residue, thereby converting all of the nickel and iron and the a portion of the magnesium into water-insoluble substances and also recovering hydrochloric acid, and a washing step consisting of washing the roasted product with water, thereby separating it into a water-insoluble portion containing of the nickel and iron and a portion of the magnesium and an aqueous solution of magnesium chloride; a method characterized in that the roasting is carried out at a temperature of from 150 °C to 250 °C

4

European
Patent Office

# EUROPEAN SEARCH REPORT

Application Number

EP 91 11 5128

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X,P | EP-A-0 434 053   (NISSHIN STEEL) <br> * claim 1 * <br> – – – | 1 | C 22 B 3/10 <br> C 22 B 23/00 |
| A | PATENT ABSTRACTS OF JAPAN vol. 13, no. 315 (C-619)(3663), 18 July 1989; <br> & JP - A - 1100228 (NISSHIN STEEL) 18.04.1989 (cat. D) <br> – – – – – | 1 | |

TECHNICAL FIELDS
SEARCHED (Int. Cl.5)

C 22 B

The present search report has been drawn up for all claims

| Place of search | Date of completion of search | Examiner |
|---|---|---|
| Berlin | 23 October 91 | SCHULTZE D |

CATEGORY OF CITED DOCUMENTS

X : particularly relevant if taken alone
Y : particularly relevant if combined with another
     document of the same catagory
A : technological background
O : non-written disclosure
P : intermediate document
T : theory or principle underlying the invention

E : earlier patent document, but published on, or after
     the filing date
D : document cited in the application
L : document cited for other reasons

&: member of the same patent family, corresponding
     document